# EUROPÄISCHE PATENTSCHRIFT

(11) **EP 3 338 056 B1**
(45) Veröffentlichungstag und Bekanntmachung des Hinweises auf die Patenterteilung: **30.03.2022**
(21) Anmeldenummer: 16732257.7
(22) Anmeldetag: 17.06.2016
(51) Int. Cl.: G06K 9/00, G01C 21/30, G06F 16/583, G06F 16/9537

(54) **VERFAHREN ZUM LOKALISIEREN EINES AUTOMATISIERTEN KRAFTFAHRZEUGS**
PROCEDURE FOR LOCALIZING AN AOUTONOMOUS VEHICLE
PROCÉDURE POUR LOCALISER UN VÉHICULE AUTONOME

(30) Priorität: 18.08.2015 DE 102015215699
(43) Veröffentlichungstag der Anmeldung: 27.06.2018
(73) Patentinhaber: Robert Bosch GmbH, 70442 Stuttgart (DE)
(72) Erfinder: SKUPIN, Christian, 30823 Garbsen (DE); LANGENBERG, Markus, 30559 Hannover (DE); ZAUM, Daniel, 31157 Sarstedt (DE); HOMANN, Hanno, 30629 Hannover (DE); KNORR, Moritz Michael, 31134 Hildesheim (DE); KLEJNOWSKI, Lukas, 30173 Hannover (DE); GERALDY, Alexander, 31141 Hildesheim (DE); PAGEL, Michael, 71640 Ludwigsburg (DE); CAKAR, Emre, 31157 Sarstedt (DE); MARX, Jochen, 31180 Emmerke (DE); HINTERLEITNER, Isabella, 31137 Hildesheim (DE); MIELENZ, Holger, 73760 Ostfildern (DE)
(86) Internationale Anmeldenummer: PCT/EP2016/064103
(87) Internationale Veröffentlichungsnummer: WO 2017/028994

(56) Entgegenhaltungen:
- EP-A1- 2 019 382
- JP-A- 2012 221 291

## Beschreibung

Die Erfindung betrifft ein Verfahren zum Lokalisieren eines automatisierten Kraftfahrzeugs. Die Erfindung betrifft ferner ein System zum Lokalisieren eines automatisierten Kraftfahrzeugs.

### Stand der Technik

Verfahren zu einer hochgenauen Lokalisierung von Fahrzeugen sind bekannt. Allen derartigen Verfahren ist gemein, dass sie für die Lokalisierung Referenzdaten (Lokalisierungsreferenzdaten oder Landmarkdaten) erfordern, die typischerweise durch eine lokale Sensorik erfasst und entweder lokal im Fahrzeug aggregiert (autarke Aggregation) oder mittels einer Backend-Anbindung auf einen Server übermittelt und dort zentral aggregiert (kollektive Aggregation) werden. Letzterer Ansatz hat den Vorteil kollektiv gesammelter und aggregierter Daten, die für ein Kollektiv von Fahrzeugen verfügbar sind.

EP 2 019 382 A1 offenbart eine Unterstützungs-Steuerungsvorrichtung zum Steuern einer Betriebscharakteristik von Fahrerassistenzsystemen in Abhängigkeit von einer ermittelten Lokalisierungsgenauigkeit.

### Offenbarung der Erfindung

Eine Aufgabe der Erfindung ist es, ein verbessertes Verfahren zum Lokalisieren eines automatisierten Kraftfahrzeugs bereitzustellen.

Gemäß einem ersten Aspekt wird die Aufgabe gelöst mit einem Verfahren zum Lokalisieren eines automatisierten Kraftfahrzeugs nach Anspruch 1.

Gemäß einem zweiten Aspekt wird die Aufgabe gelöst mit einem System zum Lokalisieren eines automatisierten Kraftfahrzeugs nach Anspruch 11. Dadurch wird erreicht, dass vom automatisierten Kraftfahrzeug ein Feedback betreffend die erreichte Lokalisierungsgenauigkeit mit vorhandenen Lokalisierungsreferenzdaten signalisiert wird. Als Konsequenz können dadurch je nach geforderter Lokalisierungsgüte entsprechende Lokalisierungsreferenzdaten an das Kraftfahrzeug übermittelt werden.

Im Ergebnis kann dadurch ein drahtloses Übertragen von Lokalisierungsreferenzdaten zwischen dem Fahrzeug und einer externen Servereinrichtung in Abhängigkeit von einer geforderten Anforderung einer Funktion des automatisierten Fahrzeugs betreffend eine Lokalisierungs- bzw. Verortungsgenauigkeit optimiert werden. Dabei werden nur solche Lokalisierungsreferenzdaten übertragen, die auch tatsächlich für die zu erzielende Lokalisierungsgenauigkeit des Kraftfahrzeugs benötigt werden. Vorteilhaft ist dies besonders für ein hochautomatisiertes bzw. autonomes Kraftfahrzeug verwendbar. Eine gewünschte Genauigkeit einer Lokalisierung wird auf diese Weise nicht über- oder untererfüllt, wodurch technische Anforderungen an Verortungssysteme optimiert werden können.

Ferner ist dadurch auch möglich, dass im Falle, dass eine Lokalisierungsgenauigkeit mit den vorhandenen Lokalisierungsreferenzdaten nicht erreicht wird, Funktionalitäten des automatisierten Kraftfahrzeugs deaktiviert werden können. Vorteilhafte Weiterbildungen des Verfahrens sind Gegenstand von abhängigen Ansprüchen.

Die Erfindung sieht vor, dass eine Art und/oder eine Menge der an das automatisierte Kraftfahrzeug übermittelten Lokalisierungsreferenzdaten von der erreichten und zu erzielenden Lokalisierungsgenauigkeit abhängt. Dadurch kann beispielweise berücksichtigt werden, dass sich je nach erreichter und zu erzielender Lokalisierungsgenauigkeit ein geeigneter Datensatz an Lokalisierungsreferenzdaten zur Verfügung gestellt wird, so dass sich bei der Eigenlokalisierung des automatisierten Fahrzeugs gerade die geforderte Lokalisierungsgenauigkeit einstellt.

Die Erfindung sieht vor, dass die Lokalisierungsreferenzdaten mittels einer extern vom automatisierten Kraftfahrzeug angeordneten Servereinrichtung an das automatisierte Kraftfahrzeug übermittelt werden. Dadurch sind eine hohe Aktualität und ein hohes Speichervolumen von Lokalisierungsreferenzdaten für das automatisierte Kraftfahrzeug unterstützt.

Eine weitere vorteilhafte Weiterbildung des Verfahrens zeichnet sich dadurch aus, dass für ein Bereitstellen eines Datensatzes an Lokalisierungsreferenzdaten zur Erreichung der vorgegebenen Lokalisierungsgenauigkeit Umgebungsbedingungen berücksichtigt werden. Auf diese Weise kann dem Umstand Rechnung getragen werden, dass ein Sensor unter verschiedenen Umgebungsbedingungen in der Regel unterschiedlich leistungsfähig ist. In der Regel braucht man z.B. in der Nacht für eine geforderte Lokalisierungsgenauigkeit mehr Lokalisierungsreferenzdaten als tagsüber, so dass dadurch eine Datenübertragungsrate für die Lokalisierungsreferenzdaten optimierbar ist.

Eine weitere vorteilhafte Weiterbildung des Verfahrens zeichnet sich dadurch aus, dass für ein Bereitstellen eines Datensatzes an Lokalisierungsreferenzdaten zur Erreichung der vorgegebenen Lokalisierungsgenauigkeit Eigenschaften der Sensoreinrichtung berücksichtigt werden. Auf diese Weise können technisch unterschiedliche Sensoren verwendet werden, wobei in der Regel z.B. leistungsfähige Sensoren weniger Daten und leistungsärmere Sensoren mehr Daten für eine geforderte Lokalisierungsgenauigkeit bzw. Lokalisierungsgüte benötigen. Eine weitere vorteilhafte Weiterbildung des Verfahrens sieht vor, dass die Lokalisierungsreferenzdaten von einer Erzeugungseinrichtung erzeugt und für die Servereinrichtung bereitgestellt werden. Auf diese Weise kann eine Art von "Datenpool" an Lokalisierungsreferenzdaten erzeugt und für die Servereinrichtung zur weiteren Verwendung bereitgestellt werden.

Eine weitere vorteilhafte Weiterbildung des Verfahrens sieht vor, dass im Falle, dass die ermittelte Lokalisierungsgüte hoch ist (d.h. dass z.B. eine geforderte Lokalisierungsgenauigkeit im automatisierten Fahrzeug übererfüllt wird), die Lokalisierungsreferenzdaten in definiert verringertem Umfang an das automatisierte Kraftfahrzeug übermittelt werden. In diesem Fall werden zur Erreichung einer geforderten Lokalisierungsgüte weniger Lokalisierungsreferenzdaten benötigt als bisher, so dass eine zu übermittelnde Anzahl bzw. Menge an Lokalisierungsreferenzdaten vorteilhaft reduziert werden kann.

Eine weitere vorteilhafte Weiterbildung des Verfahrens sieht vor, dass im Falle, dass die erreichte Lokalisierungsgenauigkeit des automatisierten Kraftfahrzeugs niedrig ist (d.h. dass z.B. eine geforderte Lokalisierungsgenauigkeit im automatisierten Fahrzeug nicht erreicht ist), die Lokalisierungsreferenzdaten in definiert erhöhtem Umfang an das automatisierte Kraftfahrzeug übermittelt werden. In diesem Fall werden zur Erreichung der geforderten Lokalisierungsgüte mehr Lokalisierungsreferenzdaten benötigt als bisher, so dass eine zu übermittelnde Anzahl bzw. Menge an Lokalisierungsreferenzdaten vorteilhaft gesteigert wird.

Eine weitere vorteilhafte Weiterbildung des Verfahrens sieht vor, dass ein Übermitteln der mit Ortsinformation verknüpften Umgebungsdaten an die Servereinrichtung durchgeführt wird. Dadurch ist ein hoher Aktualitätsgrad von Lokalisierungsreferenzdaten unterstützt. Aus den übermittelten Daten kann von der Erzeugungseinrichtung eine Erzeugung bzw. Extraktion von Lokalisierungsreferenzdaten durchgeführt werden.

Eine weitere vorteilhafte Weiterbildung des Verfahrens sieht vor, dass die Lokalisierungsreferenzdaten wenigstens teilweise mittels einer im Kraftfahrzeug angeordneten Erzeugungseinrichtung erzeugt werden. Dadurch kann eine Erzeugung der Lokalisierungsreferenzdaten teilweise auf das Kraftfahrzeug ausgelagert werden, wodurch eine Entlastung einer Haupt-Erzeugungseinrichtung für Landmarkdaten realisiert wird und in der Regel ein geringeres Datenvolumen bei der Übermittlung der Umgebungsdaten an die Servereinrichtung erreicht wird.

Die Erfindung wird im Folgenden mit weiteren Merkmalen und Vorteilen anhand von zwei Figuren detailliert beschrieben. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung, sowie unabhängig von ihrer Formulierung bzw. Darstellung in der Beschreibung bzw. in den Figuren. Die Figuren sind vor allem dazu gedacht, die erfindungswesentlichen Prinzipien zu verdeutlichen.

In den Figuren zeigt:
- Fig. 1: eine prinzipielle Darstellung einer Ausführungsform des erfindungsgemäßen Systems; und
- Fig. 2: ein prinzipielles Ablaufdiagramm einer Ausführungsform des erfindungsgemäßen Verfahrens.

### Beschreibung von Ausführungsformen

Für ein automatisiertes bzw. autonomes Fahren eines Kraftfahrzeugs mit vollständiger Längs- und Querführung des Kraftfahrzeugs ist eine hohe Lokalisierungsgenauigkeit des Kraftfahrzeugs in der Umgebung mit einer Größenordnung von ca. 10 cm erforderlich. Auf diese Weise wird dem Kraftfahrzeug beispielsweise ermöglicht, eine Haltelinie vor einer Ampel genau anzufahren.

Demgegenüber muss für ein Assistenzsystem zur Fahrerinformation eine Lokalisierungsgüte geringer ausgebildet sein, wobei einem Fahrer des Fahrzeugs z.B. mitgeteilt wird, dass demnächst nach rechts abgebogen werden muss. Unter einer geringen Lokalisierungsgüte kann somit eine Lokalisierungsgüte in einer Größenordnung von ca. 5 m bis ca. 10 m verstanden werden.

Als ein Beispiel einer Lokalisierungsreferenz bzw. von Lokalisierungsreferenzdaten kann ein Objekt in der Umgebung angesehen werden, an dem ein Kraftfahrzeug vorbeifährt. Eine Kamera des Kraftfahrzeugs erfasst das Objekt (z.B. ein Verkehrsschild) mehrfach mit einer definierten Aufnahmefrequenz, z.B. alle 50 ms, wodurch das Verkehrsschild als Umgebungsdaten in mehreren Bildern vorhanden ist. Mittels eines Erzeugungsalgorithmus werden die erfassten Bilder zu einem einzigen Lokalisierungsreferenzdatum in Form des Verkehrsschilds erzeugt. Dabei kann auch ermittelt werden, mit welcher Wahrscheinlichkeit das erfasste Objekt durch erzeugte Lokalisierungsreferenzdaten bzw. Landmarkdaten repräsentiert wird bzw. wie sicher sich das System ist, dass sich das erfasste Objekt an einem definierten Ort befindet.

Es ist möglich, durch weitere Erzeugungsschritte z.B. die Erkennungsrate des Objekts pro Vorbeifahrt an diesem Objekt in die Erzeugung der zugehörigen Lokalisierungsreferenzdaten einfließen zu lassen. Weiterhin wird in der Regel im Rahmen der Erzeugung die Ortsgenauigkeit bzw. die Information zur räumlichen Befindlichkeit der Lokalisierungsreferenzdaten verbessert.

Die Vorteile, die sich für den Nutzer durch Nutzung einer kollektiv erzeugten Datenbasis (d.h. eine Erzeugung mittels mehrerer an eine zentrale Datenbasis angebundene Kraftfahrzeuge) im Vergleich zu einer autarken Erzeugung (d.h. eine Erzeugung nur vom Kraftfahrzeug ohne eine Anbindung an eine zentrale Datenbasis) ergeben, können insbesondere sein:
- Höhere Genauigkeit der aggregierten Daten durch Zugrundelegung einer größeren Datenbasis
- Größere örtliche Abdeckung der erzeugten Daten
- Höhere Aktualität der erzeugten Daten

Eine Hürde für die Bereitstellung von Lokalisierungsreferenzdaten zur hochgenauen Lokalisierung stellt die Übertragung entsprechender Daten zwischen Server und Client möglichst in Echtzeit dar, da erforderliche Datenmengen für die Lokalisierung typischerweise sehr groß sind, beispielsweise im Bereich von ca. 500 MByte/km.

Eine drahtlose Kommunikationsschnittstelle zwischen einem Server und dem automatisierten Kraftfahrzeug kann eine Engstelle darstellen, weil die Daten typischerweise laufend nachgeladen werden. Dabei bestehen unterschiedliche Anforderungen je nach Funktionalitäten des automatisierten Fahrzeugs, wobei ein voll autonomes Fahrzeug die höchsten Anforderungen betreffend Echtzeitübertragung der Daten aufweist. Die in Echtzeit übertragenen Daten werden zu einer möglichst genauen Verortung bzw. Lokalisierung des Kraftfahrzeugs benötigt.

Es ist daher erstrebenswert, nur so viele Lokalisierungsreferenzdaten zu verwenden wie unbedingt erforderlich, um eine vorgegebene Lokalisierungsgenauigkeit bzw. -güte zu realisieren.

Die Landmarkdaten sind Muster- bzw. Referenzdaten aus einer Umgebung des Kraftfahrzeugs, an die Ortsinformationen hinzugefügt bzw. die mit Ortsinformationen verknüpft sind. Gute Landmarkdaten sind solche mit einem hohen Wiedererkennungswert und hoher örtlicher Genauigkeit betreffend eine Kenntnis einer örtlichen Befindlichkeit der Landmarkdaten, wobei durch den hohen Wiedererkennungswert eine "robustere" Lokalisierung bzw. Verortung des Kraftfahrzeugs unterstützt ist.

Konventionelle Verfahren zur Erzeugung der Landmarkdaten für eine hochgenaue Lokalisierung nutzen sämtliche potentielle Landmarkdaten, die erfasst werden können, für die Erzeugung der Landmarkdaten. Dabei werden sämtliche erzeugten Landmarkdaten wiederum zur Lokalisierung genutzt.

Nachteilig bei diesem konventionellen Ansatz kann sein, dass möglicherweise wesentlich mehr Landmarkdaten verarbeitet und für die Lokalisierung verwendet werden als unbedingt erforderlich. Dies kann zu einem unnötig hohen Datenaufkommen führen, welches nur mit hohem technischem Aufwand bewältigt werden und daher kostenintensiv sein kann.

Vorgeschlagen wird daher ein Ansatz, für die Übertragung bzw. Erzeugung der Landmarkdaten eine jeweils tatsächlich erreichte Lokalisierungsgenauigkeit zu berücksichtigen, wodurch eine Art von Regelung bei der Verarbeitung der Landmarkdaten in der Art und Weise unterstützt ist, dass nur solche Landmarkdaten übertragen bzw. generiert werden, wie es für die Erreichung einer vorhandenen Lokalisierungsgenauigkeit erforderlich ist. Beispielsweise führt eine zu geringe aktuelle Lokalisierungsgenauigkeit dazu, dass zukünftig für diese Umgebungssituation mehr, bevorzugt robuste Landmarkdaten an das automatisierte Kraftfahrzeug übermittelt werden.

Wird hingegen mit den vorhandenen Lokalisierungsreferenzdaten eine höhere als die geforderte Lokalisierungsgenauigkeit erreicht, hat dies zur Folge, dass zur Lokalisierung für diese Umgebungssituation zukünftig die Anzahl der übermittelten Landmarkdaten reduziert wird, bis sich die geforderte Lokalisierungsgenauigkeit einstellt.

Vorteilhaft kann auf diese Weise erreicht werden, dass insbesondere für künftige Kraftfahrzeuge an derselben Position mit ähnlichen Anforderungen an Lokalisierungsgenauigkeit stets nur so viele Landmarkdaten zur Lokalisierung an das automatisierte Kraftfahrzeug übermittelt werden, wie unbedingt erforderlich.

Denkbar ist, dass bei der Bestimmung des Umfangs erforderlicher Landmarkdaten folgende Abhängigkeiten berücksichtigt werden:
- Eine im Kraftfahrzeug verwendete Sensorik, wobei die verwendete Sensorik Einfluss auf eine Erfassbarkeit von Landmarkdaten haben kann. Dies kann beispielweise durch unterschiedliche technische Leistungsfähigkeiten von verschiedenen Sensortechnologien begründet sein.
- Aktuelle Umgebungsbedingungen, wobei zum Beispiel Regen, Nacht, Nebel, usw. einen Einfluss auf die Erfassbarkeit von Landmarkdaten haben können, weil Sensoreinrichtungen in der Regel unter unterschiedlichen Umgebungsbedingungen unterschiedlich leistungsfähig sind. Zu einer exakten Verortung sind dabei nachts in der Regel mehr Landmarkdaten erforderlich als tagsüber, wo meistens wenige robuste Landmarkdaten zur Verortung ausreichen.

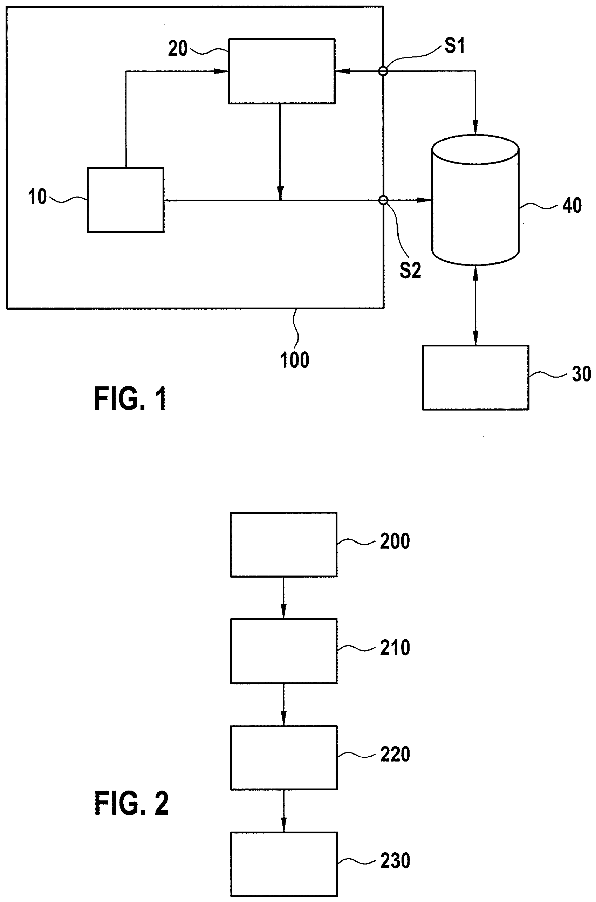

Fig. 1 zeigt schematisch Komponenten eines erfindungsgemäßen Systems 100 zum Lokalisieren eines automatisierten Kraftfahrzeugs. Das System 100 umfasst eine Sensoreinrichtung 10 des automatisierten Kraftfahrzeugs, vorzugsweise einen Videosensor, Radarsensor, usw., die eine Erfassung einer Umgebung und dabei eine Ermittlung von Umgebungsdaten des Kraftfahrzeugs durchführt. Zu diesem Zweck erfasst die Sensoreinrichtung 10 insbesondere Bilddaten in Form von Punktwolken, Linienmerkmalen, usw. Die genannten Daten können auch semantische Merkmale umfassen, wie zum Beispiel Bäume, Straßenbeleuchtungseinrichtungen, Gebäude, usw.

Um eine gewisse Grundverortung des Kraftfahrzeugs durchführen zu können, ist im automatisierten Kraftfahrzeug ferner eine Positionserfassungseinrichtung (nicht dargestellt), z.B. in Form eines GPS-Systems vorgesehen. Es kann damit für das Kraftfahrzeug eine grobe Grundverortung mit einer Genauigkeit von z.B. ca. 10 m bereitgestellt werden.

Eine Lokalisierung des automatisierten Kraftfahrzeugs und ein Ermitteln einer Lokalisierungsgenauigkeit bzw. -güte des Kraftfahrzeugs anhand einer geforderten bzw. vorgegebenen Lokalisierungsgenauigkeit werden mittels einer im Kraftfahrzeug angeordneten Lokalisierungseinrichtung 20 durchgeführt. In die Ermittlung der Lokalisierungsgüte können folgende Daten einfließen: Ortsgenauigkeiten und/oder Menge der Lokalisierungsreferenzdaten, Grad der eindeutigen Erkennung von Lokalisierungsreferenzen (z.B. Verkehrsschilder, Objekte in der Umgebung, usw.) in der aktuellen Fahrzeugumgebung mittels der Sensoreinrichtung 10. Die Lokalisierungseinrichtung 20 ist auf diese Weise in der Lage, eine Ermittlung bzw. Abschätzung der Position des Kraftfahrzeugs und eine zugehörige Schätzgenauigkeit der Positionsschätzung anhand der vorliegenden Lokalisierungsreferenzdaten durchzuführen.

Zudem kann zur abgeschätzten Position ein Sicherheitswert ermittelt werden, welcher definiert, wie genau die ermittelte Position ist. Dies ergibt eine spezifische Lokalisierungsgenauigkeit. Eine mittlere Lokalisierungsgenauigkeit bzw. -güte kann beispielsweise in einer Größenordnung von ca. 1m, eine geringe Lokalisierungsgüte kann beispielsweise in einer Größenordnung von ca. 10 m, eine hohe Lokalisierungsgüte kann beispielsweise in einer Größenordnung von ca. 10 cm liegen.

Eine in der Nähe einer externen Servereinrichtung 40 angeordnete Erzeugungseinrichtung 30 ist dazu vorgesehen, aus den von der Sensoreinrichtung 10 erfassten Umgebungsdaten Lokalisierungsreferenzdaten zu erzeugen bzw. die Lokalisierungsreferenzdaten aus den genannten Daten zu extrahieren. Die Erzeugungseinrichtung 30 kann alternativ aber auch innerhalb automatisierten Kraftfahrzeug 40 angeordnet sein (nicht dargestellt). Bei der Erzeugung der Lokalisierungsreferenzdaten wird die gegenwärtige Lokalisierungsgenauigkeit, die typischerweise von der Lokalisierungseinrichtung 20 bereitgestellt wird, mit berücksichtigt.

Ein Wert einer ermittelten Lokalisierungsgenauigkeit wird über eine zweite Schnittstelle S2 des Systems 100 an die Servereinrichtung 40 signalisiert. Im Ergebnis kann dadurch erreicht werden, dass bei Vorliegen einer hohen Lokalisierungsgenauigkeit, z.B. durch ein "Übererfüllen" einer geforderten bzw. vorgegebenen Lokalisierungsgenauigkeit, eine Übermittlung von Lokalisierungsreferenzdaten an das automatisierte Kraftfahrzeug über eine erste Schnittstelle S1 reduziert wird. Weiterhin kann dadurch realisiert werden, dass bei einer geringen Lokalisierungsgüte, z.B. durch "Untererfüllen" der geforderten Lokalisierungsgüte, eine größere Menge an Lokalisierungsreferenzdaten über die erste Schnittstelle S1 an das Kraftfahrzeug übermittelt wird, um die vorgegebene Lokalisierungsgenauigkeit zu erreichen.

Im Ergebnis kann auf diese Weise eine drahtlose Datenkommunikation zwischen der externen Servereinrichtung zur 40 und dem automatisierten Kraftfahrzeug optimiert betrieben werden.

Die mit Ortsinformation verknüpften Umgebungsdaten können über die zweite Schnittstelle S2 in Echtzeit oder zeitverzögert an die externe Servereinrichtung 40 übermittelt werden.

Vorzugsweise über die erste Schnittstelle S1 und alternativ oder zusätzlich über die zweite Schnittstelle S2 können Landmarkdaten durch das Fahrzeug angefordert werden, wobei dazu z.B. folgende Parameter vorgesehen sein können:
- Örtlichkeit, für die Landmarkdaten angefordert werden
- Umgebungsbedingungen (Tag/Nacht, Schnee, Regen, usw.)
- Sensoreigenschaften (Sensortyp, usw.)
- Geforderte Lokalisierungsgenauigkeit

Ferner können die von der externen Servereinrichtung 40 an das Kraftfahrzeug übermittelten Landmarkdaten über die erste Schnittstelle S1 in Echtzeit bereitgestellt und/oder auf das Kraftfahrzeug vorgeladen werden (engl. pre-fetch) und bei entsprechendem Bedarf laufend nachgeladen werden.

Die Schnittstellen S1, S2 des Systems 100 repräsentieren somit Datenengstellen mit begrenzter Datenübertragungskapazität, die beispielsweise als Mobilfunkschnittstellen oder WLAN-Schnittstellen des automatisierten Kraftfahrzeugs ausgebildet sein können.

Bei der Übermittlung der mit Ortsinformation verknüpften Umgebungsdaten bzw. des Werts der Lokalisierungsgenauigkeit an die Servereinrichtung 40 können der Servereinrichtung 40 auch die gegenwärtige Umgebungssituation (z.B. wenigstens der gegenwärtige Ort, zusätzlich auch gegenwärtige Umgebungsbedingungen, wie Nacht, Regen, Nebel, usw.) und optional zusätzlich für die gegenwärtige Leistungsfähigkeit der Sensoreinrichtung 10 übermittelt werden. Dadurch kann berücksichtigt werden, dass bei ungünstigen Witterungsverhältnissen, wie z.B. Regen, Nebel, Schneefall usw. die Sensoreinrichtung 10 für die Eigenlokalisierung andere Daten bzw. Bilder als bei Sonnenschein liefern kann.

Sensoreinrichtungen 10 können betreffend Auflösung, Aufnahmegenauigkeit, Detailtreue, etc. unterschiedliche Eigenschaften aufweisen. Eine Abhängigkeit der Erzeugung der Landmarkdaten kann auch von einer Leistungsfähigkeit der Sensoreinrichtung 10 abhängig sein, wodurch berücksichtigt werden kann, dass Kraftfahrzeuge mit leistungsschwacher Sensorik in der Regel wesentlich mehr Landmarkdaten zu einer genauen Verortung erfordern als Kraftfahrzeuge mit leistungsstarker Sensorik.

Im Ergebnis ist dadurch unterstützt, dass im Falle, dass die geforderte Lokalisierungsgenauigkeit gegenwärtig unterschritten ("untergenaue Verortung") wurde, mehr Lokalisierungsreferenzdaten von der Servereinrichtung 40 übertragen und optional von der Erzeugungseinrichtung 30 auch erzeugt werden. Dadurch können für zukünftige automatisierte Kraftfahrzeuge an derselben Position bei ähnlichen Anforderungen an eine Lokalisierungsgenauigkeit Lokalisierungsreferenzdaten bereitgestellt werden, die eine verbesserte Lokalisierungsgenauigkeit ermöglichen.

Der Servereinrichtung 40 ist bekannt, welche Menge bzw. welche Arten von Lokalisierungsreferenzdaten an verschiedenen Orten für eine geforderte Lokalisierungsgüte erforderlich sind. Sie ist also deshalb in der Lage, dem Kraftfahrzeug stets genau diejenigen Landmarkdaten bereitzustellen, die es braucht. Dadurch ist eine optimierte Datenübertragung von der Servereinrichtung 40 zum Kraftfahrzeug unterstützt.

Wird die geforderte Lokalisierungsgenauigkeit hingegen aktuell überschritten ("übergenaue Verortung"), so werden für die gegenwärtige Umgebungssituation durch die Servereinrichtung 40 Landmarkdaten in geringerem Umfang oder gar nicht übertragen.

Im Ergebnis bedeutet dies, dass für den Fall, dass die ermittelte Lokalisierungsgüte hoch ist, eine Datenübertragungsrate der Lokalisierungsreferenzdaten verringert wird, wohingegen für den Fall, dass die ermittelte Lokalisierungsgüte niedrig ist, eine Datenübertragungsrate der Lokalisierungsreferenzdaten erhöht wird. Eine technische Implementation der Lokalisierungseinrichtung 20 und der Erzeugungseinrichtung 30 kann vorzugweise als eine Software realisiert sein, wodurch eine einfache Aktualisierung und Änderung von Leistungsmerkmalen der genannten Einrichtungen unterstützt ist. Die Lokalisierungseinrichtung 20 kann alternativ auch als Hardware implementiert sein, beispielsweise als ASIC (engl. application-specific integrated circuit) oder FPGA (engl. field programmable gate array).

In einer nicht in den Figuren dargestellten Variante kann vorgesehen sein, dass die Servereinrichtung 40 innerhalb des Systems 100 und damit innerhalb des automatisierten Kraftfahrzeugs angeordnet ist. In diesem Fall ist vorteilhaft unterstützt, dass eine zu übertragende Datenmenge auf die kraftfahrzeuginterne Datenbank optimiert ist, wodurch diese effizienter ausgelegt werden kann.

Ein praktisches Beispiel des Verfahrens lässt sich wie folgt realisieren:
Ein automatisiertes bzw. autonomes Kraftfahrzeug erfasst mit seiner Sensoreinrichtung 10 Umfelddaten während der Fahrt und verknüpft diese mit Ortsinformationen, die von der Positionsermittlungseinrichtung stammen (letztere kann dabei Bestandteil der Sensoreinrichtung 10 sein, z.B. in Form eines GPS-Sensors). Mittels auf dem Kraftfahrzeug vorhandener Landmarkdaten, die z.B. von der internen oder externen Servereinrichtung 40 bereitgestellt sein können, sowie mittels der von der Sensoreinrichtung 10 aktuell erfassten Umfelddaten, wird eine Lokalisierung des automatisierten Kraftfahrzeugs durchgeführt und eine Lokalisierungsgüte des Kraftfahrzeugs in Bezug auf eine geforderte Lokalisierungsgenauigkeit ermittelt. Über die zweite Schnittstelle S2 wird die ermittelte Lokalisierungsgenauigkeit an die Servereinrichtung 40 übermittelt.

Bei der Lokalisierung kann z.B. ein Triangulationsverfahren verwendet werden, wodurch die Tatsache ausgenützt werden kann, dass mittels der Sensoreinrichtung 10 auch ermittelbar ist, in welcher Entfernung sich das Objekt relativ zum Kraftfahrzeug befindet.

Ferner werden die von Sensoreinrichtung 10 erfassten und mit Ortsinformationen verknüpften Umfelddaten über die zweite Schnittstelle S2 an die Servereinrichtung 40 übermittelt, um diese der Erzeugungseinrichtung 30 für eine Erzeugung, Aktualisierung und/oder Verbesserung der Landmarkdaten verfügbar zu machen.

Für den Fall, dass eine übergenaue Lokalisierung erreicht ist, wodurch die geforderte Lokalisierungsgenauigkeit übererfüllt ist, werden abhängig vom Grad der ermittelten Lokalisierungsgüte mittels der Servereinrichtung 40 über die erste Schnittstelle S1 weniger Landmarkdaten übertragen bzw. mittels der Erzeugungseinrichtung 30 weniger Landmarkdaten erzeugt.

Falls hingegen die erreichte Lokalisierungsgüte gering ist, d.h., dass die geforderte Lokalisierungsgüte nicht erfüllt wird, werden mittels der Servereinrichtung 40 in Abhängigkeit von der ermittelten Lokalisierungsgüte über die erste Schnittstelle S1 in größerem Umfang Landmarkdaten an das Kraftfahrzeug übertragen.

Ferner kann auf diese Weise im Falle, dass eine erforderliche Lokalisierungsgüte mit den vorhandenen Landmarkdaten nicht erreicht werden kann, eine Funktionalität im automatisierten Kraftfahrzeug, die eine höhere Lokalisierungsgüte erfordert als aktuell erreichbar, wenigstens teilweise deaktiviert werden. Dies kann z.B. dadurch begründet sein, dass die Vorrichtung in der aktuell betreffenden Umgebungssituation keine ausreichende Anzahl an Landmarkdaten bilden kann, beispielsweise in einer Umgebung ohne eine ausreichende Anzahl von Oberflächenstrukturen.

Dadurch kann einem Fahrer des Kraftfahrzeugs mitgeteilt werden, dass für eine spezifische Funktionalität des automatisierten Kraftfahrfahrzeugs eine Verortung nicht mehr ausreichend möglich ist und demzufolge die genannte Funktionalität demnächst abgeschaltet wird.

Neben den gegenwärtig mit Ortsinformationen verknüpften und übermittelten Umgebungsdaten können bereits zuvor übermittelte Umgebungsdaten, die auf der Servereinrichtung 40 noch verfügbar sind und/oder bisherige Lokalisierungsreferenzdaten, die auf der Servereinrichtung 40 bereits vorhanden sind, in die Erzeugung der Lokalisierungsreferenzdaten einfließen.

Fig. 2 zeigt schematisch einen prinzipiellen Ablauf des Verfahrens:
In einem Schritt 200 wird eine Lokalisierungsgenauigkeit für das automatisierte Kraftfahrzeug während des Betriebs vorgegeben, wobei vom Kraftfahrzeug Lokalisierungsreferenzdaten für einen definierten Ort mit einer definierten zu erzielenden Lokalisierungsgenauigkeit angefordert und an das automatisierte Kraftfahrzeug übermittelt werden.

In einem Schritt 210 werden Umgebungsdaten des automatisierten Kraftfahrzeugs mittels einer Sensoreinrichtung des automatisierten Kraftfahrzeugs erfasst und die erfassten Umgebungsdaten mit Ortsinformation verknüpft.

In einem Schritt 220 wird das automatisierte Kraftfahrzeug mittels der Lokalisierungsreferenzdaten und der erfassten Umgebungsdaten lokalisiert, wobei eine erreichte Lokalisierungsgenauigkeit ermittelt wird, wobei die erreichte Lokalisierungsgenauigkeit zum Zwecke einer Optimierung der Lokalisierungsreferenzdaten an eine externe Servereinrichtung 40 signalisiert wird.

In einem Schritt 230 wird ein Übertragen von Lokalisierungsreferenzdaten von der externen Servereinrichtung 40 an das automatisierte Kraftfahrzeug durchgeführt, die in Abhängigkeit von der erreichten Lokalisierungsgenauigkeit für ein Erreichen der zu erzielenden Lokalisierungsgenauigkeit erforderlich sind.

Eine effiziente Betriebsweise eines Lokalisierungssystems innerhalb des automatisierten Kraftfahrzeugs ist auf diese Weise vorteilhaft unterstützt. Vorteilhaft kann das Verfahren für jegliche selbstverortende Fahrzeuge verwendet werden, z.B. auch für automatisierte Fahrzeuge im Robotikbereich.

Der Fachmann wird die Merkmale der Erfindung in geeigneter Weise abändern und/oder miteinander kombinieren, ohne vom Kern der Erfindung abzuweichen, der durch die Ansprüche definiert ist.

## Patentansprüche

1. Verfahren zum Lokalisieren eines automatisierten Kraftfahrzeugs, aufweisend die Schritte:
- Vorgeben einer zu erzielenden Lokalisierungsgenauigkeit für das automatisierte Kraftfahrzeug während des Betriebs, wobei vom automatisierten Kraftfahrzeug Lokalisierungsreferenzdaten für einen definierten Ort mit der definierten zu erzielenden Lokalisierungsgenauigkeit angefordert werden;
- Erfassen von Umgebungsdaten des automatisierten Kraftfahrzeugs mittels einer Sensoreinrichtung (10) des automatisierten Kraftfahrzeugs und Verknüpfen der erfassten Umgebungsdaten mit Ortsinformation von einer Positionierungseinrichtung des automatisierten Kraftfahrzeugs;
- Lokalisieren des automatisierten Kraftfahrzeugs mittels der Lokalisierungsreferenzdaten und der erfassten Umgebungsdaten, wobei eine erreichte Lokalisierungsgenauigkeit ermittelt wird; **dadurch gekennzeichnet, daß**
- die erreichte Lokalisierungsgenauigkeit zum Zwecke einer optimierten Übermittlung der Lokalisierungsreferenzdaten an eine externe Servereinrichtung (40) signalisiert wird; und
- Übertragen von nur solchen Lokalisierungsreferenzdaten von der externen Servereinrichtung (40) an das automatisierte Kraftfahrzeug, die in Abhängigkeit von der erreichten Lokalisierungsgenauigkeit für ein Erreichen der zu erzielenden Lokalisierungsgenauigkeit erforderlich sind.

2. Verfahren nach Anspruch 1, wobei eine Art und/oder eine Menge der an das automatisierte Kraftfahrzeug übermittelten Lokalisierungsreferenzdaten von der erreichten und zu erzielenden Lokalisierungsgenauigkeit abhängt.

3. Verfahren nach Anspruch 2, wobei die Lokalisierungsreferenzdaten mittels einer extern vom automatisierten Kraftfahrzeug angeordneten Servereinrichtung (40) an das automatisierte Kraftfahrzeug übermittelt werden.

4. Verfahren nach einem der Ansprüche 1 bis 3, wobei für ein Bereitstellen eines Datensatzes an Lokalisierungsreferenzdaten zur Erreichung der vorgegebenen Lokalisierungsgenauigkeit Umgebungsbedingungen berücksichtigt werden.

5. Verfahren nach einem der Ansprüche 1 bis 4, wobei für ein Bereitstellen eines Datensatzes an Lokalisierungsreferenzdaten zur Erreichung der vorgegebenen Lokalisierungsgenauigkeit Eigenschaften der Sensoreinrichtung (10) berücksichtigt werden.

6. Verfahren nach einem der vorhergehenden Ansprüche, wobei die Lokalisierungsreferenzdaten von einer Erzeugungseinrichtung (30) erzeugt und für die Servereinrichtung (40) bereitgestellt werden.

7. Verfahren nach einem der vorhergehenden Ansprüche, wobei im Falle, dass die erreichte Lokalisierungsgenauigkeit des automatisierten Kraftfahrzeugs hoch ist, die Lokalisierungsreferenzdaten in definiert verringertem Umfang an das automatisierte Kraftfahrzeug übermittelt werden.

8. Verfahren nach einem der Ansprüche 1 bis 6, wobei im Falle, dass die erreichte Lokalisierungsgenauigkeit des automatisierten Kraftfahrzeugs niedrig ist, die Lokalisierungsreferenzdaten in definiert erhöhtem Umfang an das automatisierte Kraftfahrzeug übermittelt werden.

9. Verfahren nach einem der Ansprüche 6 bis 8, wobei die Lokalisierungsreferenzdaten wenigstens teilweise mittels einer im Kraftfahrzeug angeordneten Erzeugungseinrichtung (30) erzeugt werden.

10. Verfahren nach einem der Ansprüche 3 bis 9, wobei ein Übermitteln der mit Ortsinformation verknüpften Umgebungsdaten an die Servereinrichtung (40) durchgeführt wird.

11. System (100) zum Lokalisieren eines automatisierten Kraftfahrzeugs, aufweisend:
- eine Sensoreinrichtung (10) zum Erfassen von Umgebungsdaten des Kraftfahrzeugs und eine Positionserfassungseinrichtung zum Erfassen einer Position des Kraftfahrzeugs; und
- eine Lokalisierungseinrichtung (20) zum Lokalisieren des Kraftfahrzeugs und zum Ermitteln einer Lokalisierungsgenauigkeit des Kraftfahrzeugs; **dadurch gekennzeichnet, daß**
das System (100) eine erste Schnittstelle (S1) aufweist, über die Lokalisierungsreferenzdaten für einen definierten Ort mit einer definierten zu erzielenden Lokalisierungsgenauigkeit anforderbar und an das automatisierte Kraftfahrzeug übermittelbar sind; und
- eine zweite Schnittstelle (S2), über die eine erreichte Lokalisierungsgenauigkeit zum Zwecke einer Optimierung der Lokalisierungsreferenzdaten signalisierbar ist, wobei in Abhängigkeit von der erreichten Lokalisierungsgenauigkeit nur solche Lokalisierungsreferenzdaten von der externen Servereinrichtung (40) an das automatisierte Kraftfahrzeug übertragbar sind, die in Abhängigkeit von der erreichten Lokalisierungsgenauigkeit für ein Erreichen der zu erzielenden Lokalisierungsgenauigkeit erforderlich sind.

12. Computerprogrammprodukt mit Programmcodemitteln zum Ausführen des Verfahrens nach einem der Ansprüche 1 bis 10, wenn es auf einer elektronischen Steuerungseinrichtung (10, 20) abläuft oder auf einem computerlesbaren Datenträger gespeichert ist.

## Claims

1. Method for locating an automated motor vehicle, comprising the steps of:
- predefining a locating accuracy to be attained for the automated motor vehicle during operation, the automated motor vehicle requesting locating reference data for a defined location having the defined locating accuracy that is to be attained;
- capturing surroundings data of the automated motor vehicle by means of a sensor device (10) of the automated motor vehicle and combining the captured surroundings data with location information from a positioning device of the automated motor vehicle;
- locating the automated motor vehicle by means of the locating reference data and the captured surroundings data, wherein an achieved locating accuracy is ascertained;
**characterized in that**
- the achieved locating accuracy is signalled to an external server device (40) for the purpose of optimized transmission of the locating reference data; and
- only such locating reference data as are required on the basis of the achieved locating accuracy in order to achieve the locating accuracy that is to be attained are transferred from the external server device (40) to the automated motor vehicle.

2. Method according to Claim 1, wherein a type and/or a volume of the locating reference data transmitted to the automated motor vehicle is dependent on the achieved locating accuracy and the locating accuracy to be attained.

3. Method according to Claim 2, wherein the locating reference data are transmitted to the automated motor vehicle by means of a server device (40) arranged externally to the automated motor vehicle.

4. Method according to one of Claims 1 to 3, wherein ambient conditions are taken into consideration in order to provide a dataset of locating reference data for achieving the predefined locating accuracy.

5. Method according to one of Claims 1 to 4, wherein properties of the sensor device (10) are taken into consideration in order to provide a dataset of locating reference data for achieving the predefined locating accuracy.

6. Method according to one of the preceding claims, wherein the locating reference data are generated by a generating device (30) and provided for the server device (40).

7. Method according to one of the preceding claims, wherein if the achieved locating accuracy of the automated motor vehicle is high then a defined reduced amount of the locating reference data is transmitted to the automated motor vehicle.

8. Method according to one of Claims 1 to 6, wherein if the achieved locating accuracy of the automated motor vehicle is low then a defined increased amount of the locating reference data is transmitted to the automated motor vehicle.

9. Method according to one of Claims 6 to 8, wherein at least some of the locating reference data are generated by means of a generating device (30) arranged in the motor vehicle.

10. Method according to one of Claims 3 to 9, wherein the surroundings data combined with location information are transmitted to the server device (40).

11. System (100) for locating an automated motor vehicle, having:
- a sensor device (10) for capturing surroundings data of the motor vehicle and a position detection device for detecting a position of the motor vehicle; and
- a locating device (20) for locating the motor vehicle and for ascertaining a locating accuracy of the motor vehicle;
**characterized in that** the system (100) has
- a first interface (S1) by way of which locating reference data for a defined location having a defined locating accuracy that is to be attained can be requested and can be transmitted to the automated motor vehicle; and
- a second interface (S2) by way of which an achieved locating accuracy can be signalled for the purpose of optimizing the locating reference data, wherein the achieved locating accuracy can be taken as a basis for transferring from the external server device (40) to the automated motor vehicle only such locating reference data as are required on the basis of the achieved locating accuracy in order to achieve the locating accuracy that is to be attained.

12. Computer program product having program code means for carrying out the method according to one of Claims 1 to 10 when said computer program product is executed on an electronic control device (10, 20) or is stored on a computer-readable data storage medium.

## Revendications

1. Procédé permettant de localiser un véhicule automobile automatisé, présentant les étapes consistant à :
- spécifier une précision de localisation à obtenir pour le véhicule automobile automatisé en cours de fonctionnement, des données de référence de localisation étant demandées au véhicule automobile automatisé pour un lieu défini avec la précision de localisation définie à obtenir ;
- détecter des données environnementales du véhicule automobile automatisé au moyen d'un dispositif de détection (10) du véhicule automobile automatisé, et associer les données environnementales détectées à des informations de lieu provenant d'un dispositif de positionnement du véhicule automobile automatisé ;
- localiser le véhicule automobile automatisé au moyen des données de référence de localisation et des données environnementales détectées, une précision de localisation atteinte étant déterminée ;
**caractérisé en ce que**
- la précision de localisation atteinte est signalée à un dispositif serveur externe (40) en vue d'une transmission optimisée des données de référence de localisation ; et
- ne transmettre que des données de référence de localisation du dispositif serveur externe (40) au véhicule automobile automatisé qui sont nécessaires pour atteindre la précision de localisation à obtenir en fonction de la précision de localisation atteinte.

2. Procédé selon la revendication 1, dans lequel un type et/ou une quantité des données de référence de localisation transmises au véhicule automobile automatisé dépend(ent) de la précision de localisation atteinte et à obtenir.

3. Procédé selon la revendication 2, dans lequel les données de référence de localisation sont transmises au véhicule automobile automatisé au moyen d'un dispositif serveur (40) disposé à l'extérieur du véhicule automobile automatisé.

4. Procédé selon l'une quelconque des revendications 1 à 3, dans lequel des conditions environnementales sont prises en compte pour fournir un ensemble de données de données de référence de localisation afin d'atteindre la précision de localisation prédéfinie.

5. Procédé selon l'une quelconque des revendications 1 à 4, dans lequel des propriétés du dispositif de détection (10) sont prises en compte pour fournir un ensemble de données de données de référence de localisation afin d'atteindre la précision de localisation prédéfinie.

6. Procédé selon l'une quelconque des revendications précédentes, dans lequel les données de référence de localisation sont générées par un dispositif de génération (30) et sont fournies au dispositif serveur (40) .

7. Procédé selon l'une quelconque des revendications précédentes, dans lequel, si la précision de localisation atteinte du véhicule automobile automatisé est élevée, les données de référence de localisation sont transmises au véhicule automobile automatisé dans un volume réduit de manière définie.

8. Procédé selon l'une quelconque des revendications 1 à 6, dans lequel, si la précision de localisation atteinte du véhicule automobile automatisé est faible, les données de référence de localisation sont transmises au véhicule automobile automatisé dans un volume augmenté de manière définie.

9. Procédé selon l'une quelconque des revendications 6 à 8, dans lequel les données de référence de localisation sont générées au moins en partie au moyen d'un dispositif de génération (30) disposé sur le véhicule automobile.

10. Procédé selon l'une quelconque des revendications 3 à 9, dans lequel une transmission des données environnementales associées à des informations de lieu au dispositif serveur (40) est effectuée.

11. Système (100) permettant de localiser un véhicule automobile automatisé, présentant :
- un dispositif de détection (10) permettant de détecter des données environnementales du véhicule automobile et un dispositif de détection de position permettant de détecter une position du véhicule automobile ; et
- un dispositif de localisation (20) permettant de localiser le véhicule automobile et de déterminer une précision de localisation du véhicule automobile ;
**caractérisé en ce que** le système (100) présente une première interface (S1) par l'intermédiaire de laquelle des données de référence de localisation pour un lieu défini avec une précision de localisation définie à obtenir peuvent être demandées et peuvent être transmises au véhicule automobile automatisé ; et
- une deuxième interface (S2) par l'intermédiaire de laquelle une précision de localisation atteinte peut être signalée en vue d'une optimisation des données de référence de localisation, dans lequel, en fonction de la précision de localisation atteinte, ne peuvent être transmises au véhicule automobile automatisé que des données de référence de localisation provenant du dispositif serveur externe (40) qui sont nécessaires en fonction de la précision de localisation atteinte afin d'atteindre la précision de localisation à obtenir.

12. Produit de programme informatique comprenant des moyens de code programme pour exécuter le procédé selon l'une quelconque des revendications 1 à 10, s'il est exécuté sur un dispositif de commande électronique (10, 20) ou est stocké sur un support de données lisible par ordinateur.
